# EUROPÄISCHE PATENTSCHRIFT

(11) **EP 1 742 280 B1**
(45) Veröffentlichungstag und Bekanntmachung des Hinweises auf die Patenterteilung: **24.12.2014**
(21) Anmeldenummer: 05013818.9
(22) Anmeldetag: 27.06.2005
(51) Int. Cl.: H01M 2/30, B60K 28/14, H02H 3/00

(54) **Anschlusseinheit zum Verbinden von elektrischen Komponenten mit einer Kraftfahrzeugbatterie**
Junction unit for connecting electrical components to a car battery
Unité de raccordement pour connecter des composants électriques avec une batterie pour automobile

(43) Veröffentlichungstag der Anmeldung: 10.01.2007
(73) Patentinhaber: Delphi Technologies, Inc., Troy, MI 48007 (US)
(72) Erfinder: Hold, Klaus, 42897 Remscheid (DE); Rosemann, Achim, 58332 Schwelm (DE); Hirsch, Krystian, 42489 Wülfrath (DE)
(74) Vertreter: Allart, René Paul Pruli Slamet

(56) Entgegenhaltungen:
- WO-A-2005/015704
- US-A- 5 818 122
- US-A- 5 926 354
- PATENT ABSTRACTS OF JAPAN Bd. 1999, Nr. 02, 26. Februar 1999 (1999-02-26) & JP 10 310004 A (HARNESS SOGO GIJUTSU KENKYUSHO:KK; SUMITOMO WIRING SYST LTD; SUMITOMO), 24. November 1998 (1998-11-24)

## Beschreibung

Die Erfindung betrifft eine Anschlusseinheit zum Verbinden von elektrischen und/ oder elektronischen Komponenten mit einem Pol einer Kraftfahrzeugbatterie.

Moderne Kraftfahrzeuge verfügen über ein Batteriemanagementsystem, welches die Überwachung des Batteriestroms und/oder der Batteriespannung erfordert. Bekannt ist daher eine Anschlusseinheit, die einen Sensor zur Messung des Batteriestroms und/oder der Batteriespannung aufweist und zur Verbindung mit dem Minuspol einer Kraftfahrzeugbatterie vorgesehen ist.

Sicherheitsvorschriften, die moderne Kraftfahrzeuge betreffen, verlangen außerdem, dass zumindest der Anlasser und ggf. auch die Lichtmaschine des Kraftfahrzeugs bei einem Unfall automatisch von der Kraftfahrzeugbatterie entkoppelt wird bzw. werden. Eine weitere bekannte Anschlusseinheit verfügt zu diesem Zweck über eine Trenneinheit, welche bei einer unfallbedingten Aktivierung die elektrische Verbindung zwischen der Kraftfahrzeugbatterie und dem Anlasser bzw. der Lichtmaschine unterbricht. Diese bekannte Anschlusseinheit ist für eine Verbindung mit dem Pluspol der Kraftfahrzeugbatterie vorgesehen.

Aus der US-A-5 926 354 ist eine Anschlusseinheit nach dem Oberbegriff des Anspruchs 1 bekannt.

Der Erfindung liegt die Aufgabe zugrunde, eine Anschlusseinheit zu schaffen, die modernen Sicherheitsanforderungen genügt und gleichzeitig zu einer Senkung der Kosten eines Kraftfahrzeugbatterie-Managementsystems beiträgt sowie den Einbau und Ausbau einer Kraftfahrzeugbatterie in ein Kraftfahrzeug vereinfacht.

Zur Lösung der Aufgabe ist eine Anschlusseinheit mit den Merkmalen des Anspruchs 1 vorgesehen.

Die erfindungsgemäße Anschlusseinheit zum Verbinden von elektrischen und/oder elektronischen Komponenten mit einem Pol einer Kraftfahrzeugbatterie umfasst einen an den Batteriepol anschließbaren ersten Leitungsabschnitt, einen aus dem ersten Leitungsabschnitt hervorgehenden zweiten Leitungsabschnitt, welcher eine Hauptleitung und eine By-passleitung umfasst, an die jeweils wenigstens eine elektrische und/oder elektronische Komponente anschließbar ist, eine Trenneinheit, durch welche eine an die Hauptleitung angeschlossene elektrische und/oder elektronische Komponente elektrisch von der Batterie trennbar ist und wenigstens einen Sensor zur Messung eines Batteriestroms und/oder einer Batteriespannung.

Die erfindungsgemäße Anschlusseinheit verfügt also sowohl über eine Trenneinheit zur elektrischen Abkopplung von an die Batterie angeschlossenen elektrischen und/oder elektronischen Komponenten, z.B. einem Anlasser oder einer Lichtmaschine, als auch über einen Sensor zur Messung eines Batteriestroms und/oder einer Batteriespannung. Damit erfüllt die erfindungsgemäße Anschlusseinheit nicht nur die voranstehend genante Sicherheitsvorschrift, sondern sie ist auch in einem Kraftfahrzeugbatterie-Managementsystem einsetzbar.

Erfindungsgemäß sind die Trenneinheit und der Sensor zu einer Einheit zusammengefasst und vorzugsweise in einem gemeinsamen Gehäuse untergebracht. Die Trenneinheit und der Sensor lassen sich folglich in einem Arbeitsgang, d.h. also gleichzeitig, an einen Batteriepol, beispielsweise den Pluspol oder den Minuspol einer Kraftfahrzeugbatterie, anschließen. Dies erleichtert die Montage von Trenneinheit und Sensor und vereinfacht letztlich den Ein- und Ausbau der Kraftfahrzeugbatterie in ein Kraftfahrzeug bzw. aus einem Kraftfahrzeug.

Ferner bedeutet die gemeinsame Unterbringung von Trenneinheit und Sensor in einer Anschlusseinheit gegenüber der herkömmlichen getrennten Anordnung von Sensor und Trenneinheit eine Kostenersparnis, da lediglich ein gemeinsames Gehäuse hergestellt, elektrisch verschaltet und für den Anschluss der elektrischen und/oder elektronischen Komponenten vorbereitet zu werden braucht.

Durch die erfindungsgemäße Aufspaltung des zweiten Leitungsabschnitts in eine Hauptleitung und eine Bypassleitung und die Anordnung der Trenneinheit an der Hauptleitung wird erreicht, dass bei einer Aktivierung der Trenneinheit lediglich eine an die Hauptleitung angeschlossene Komponente elektrisch von der Batterie getrennt wird, während eine an die Bypassleitung angeschlossene Komponente mit der Batterie verbunden bleibt. Auf diese Weise kann zum Beispiel sichergestellt werden, dass bei einem Unfall der Anlasser und ggf. auch die Lichtmaschine des Kraftfahrzeugs von der Batterie abgekoppelt wird bzw. werden, während die übrigen elektrischen Verbraucher des Kraftfahrzeugs und insbesondere ein elektrisches Bordnetz weiterhin mit Spannung versorgt werden.

Vorteilhafte Ausbildungen der Erfindung sind den Unteransprüchen, der Beschreibung und der Zeichnung zu entnehmen.

Gemäß einer Ausführungsform ist der Sensor in dem ersten Leitungsabschnitt angeordnet. Bei einer derartigen Anordnung des Sensors ist der durch die Anschlusseinheit fließende Gesamtbatteriestrom messbar.

Gemäß einer alternativen Ausführungsform ist der Sensor in dem zweiten Leitungsabschnitt angeordnet. Je nachdem, ob der Sensor mit der Hauptleitung oder mit der Bypassleitung verbunden ist, lassen sich hierdurch die durch die jeweilige Leitung fließenden Teilströme messen.

Vorzugsweise sind ein erster Sensor mit der Hauptleitung und ein zweiter Sensor mit der Bypassleitung verbunden. In diesem Fall ist sowohl der durch die Hauptleitung, als auch der durch die Bypassleitung fließende Teilstrom ermittelbar.

Erfindungsgemäß ist jeweils eine Schnittstelle zum Verbinden eines elektrischen und/oder elektronischen Bordnetzes des Kraftfahrzeugs mit der Bypassleitung sowie eines Anlassers und einer Lichtmaschine des Kraftfahrzeugs mit der Hauptleitung vorgesehen. Die Schnittstellen können jeweils durch ein Steckerteil gebildet sein, das mit einem komplementär ausgebildeten Steckerteil zusammensteckbar ist, welches mit einem zum Bordnetz bzw. zum Anlasser und zur Lichtmaschine führenden Kabelstrang verbunden ist. Durch den Anschluss des Bordnetzes an die Bypassleitung und den Anschluss des Anlassers und der Lichtmaschine an die Hauptleitung wird sichergestellt, dass bei einer Aktivierung der Trenneinheit lediglich der Anlasser und die Lichtmaschine von der Batterie abgekoppelt werden, während an das Bordnetz weiterhin eine Batteriespannung angelegt ist. Alternativ kann die Lichtmaschine auch zusammen mit dem Bordnetz mit der Bypassleitung verbunden werden. In diesem Fall wird bei einer Aktivierung der Trenneinheit lediglich der Anlasser von der Batterie getrennt, während sowohl das Bordnetz als auch die Lichtmaschine mit der Batterie verbunden bleiben.

Vorzugsweise ist die Trenneinheit in Abhängigkeit von einem durch den wenigstens einen Sensor ausgegebenen Messwert aktivierbar. Dies ermöglicht eine automatische Trennung einer an die Bypassleitung angeschlossenen elektrischen und/oder elektronischen Komponente von der Batterie, wenn der Sensor eine einen vorgegebenen Schwellwert überschreitende Stromstärke, beispielsweise im Falle eines Leitungskurzschlusses, und/oder einen Stromfluss in eine unerwünschte Richtung detektiert. Das durch den Sensor verursachte Aktivierungssignal wird auch als internes Signal bezeichnet, da es innerhalb der Anschlusseinheit selbst erzeugt wird.

Alternativ oder zusätzlich kann die Trenneinheit durch ein externes Signal aktivierbar sein. Ein geeignetes externes Signal wird beispielsweise durch einen Sensor verursacht, der zur Detektion einer bevorstehenden Kollision, einer plötzlichen Verzögerung und/oder einer Rollbewegung des Kraftfahrzeugs vorgesehen ist. In Frage kommt z.B. ein Signal, welches auch zur Aktivierung eines Airbags verwendet wird.

Gemäß einer weiteren Ausführungsform weist die Trenneinheit ein pyrotechnisch betätigbares Trennelement auf, mittels welchem die Hauptleitung bei einer Aktivierung der Trenneinheit durchtrennbar ist. Die Verwendung eines pyrotechnisch betätigbaren Trennelements ermöglicht eine besonders schnelle und wirksame Durchtrennung der Hauptleitung und somit eine schnelle und zuverlässige Abkopplung einer an die Hauptleitung angeschlossenen elektrischen und/oder elektronischen Komponente von der Batterie.

Die Unterbrechung der Hauptleitung kann reversibel oder irreversibel sein. Im Fall einer irreversiblen Unterbrechung der Hauptleitung muss die Anschlusseinheit nach einer Aktivierung der Trenneinheit ausgetauscht werden, wohingegen eine mit der Hauptleitung verbundene elektrische und/oder elektronische Komponente bei einer reversiblen Unterbrechung der Hauptleitung unter Rückgängigmachung der Unterbrechung leicht und insbesondere ohne einen Austausch der Anschlusseinheit elektrisch wieder an die Batterie ankoppelbar ist.

Um eine nachträgliche Kalibrierung des Sensors zu ermöglichen, weist der wenigstens eine Sensor bevorzugt einen Shunt-Widerstand auf.

Ferner kann durch den Sensor zusätzlich die Batterietemperatur messbar sein. Dies ermöglicht die Überwachung eines weiteren, für das Batteriemanagement relevanten Parameters.

Nachfolgend wird die Erfindung rein beispielhaft anhand vorteilhafter Ausführungsformen unter Bezugnahme auf die beigefügte Zeichnung beschrieben. Es zeigen:
- Fig. 1: eine erste Ausführungsform der erfindungsgemäßen Anschlusseinheit;
- Fig. 2: eine zweite Ausführungsform der erfindungsgemäßen Anschlusseinheit;
- Fig. 3: eine dritte Ausführungsform der erfindungsgemäßen Anschlusseinheit; und
- Fig. 4: eine vierte Ausführungsform der erfindungsgemäßen Anschlusseinheit.

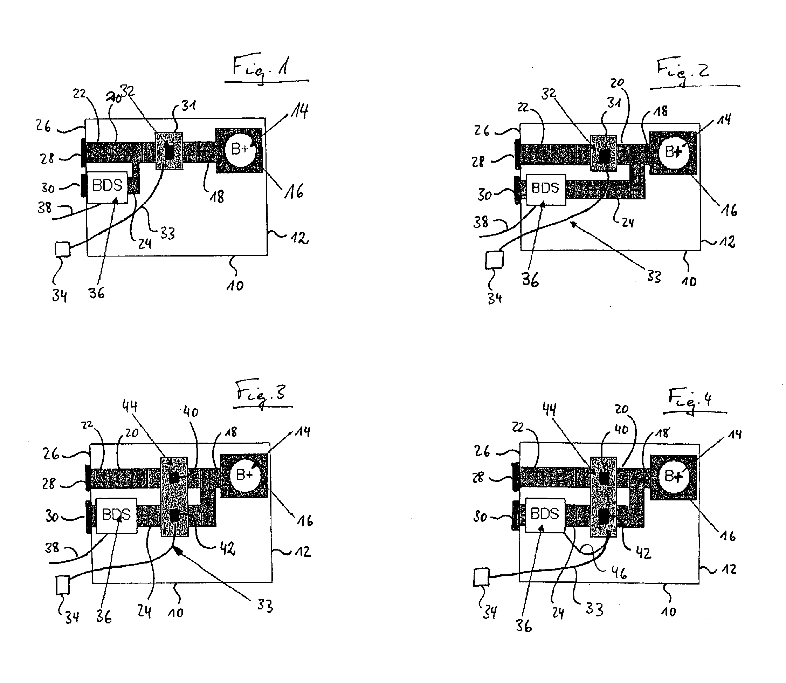

In Fig. 1 ist eine erste Ausführungsform der erfindungsgemäßen Anschlusseinheit 10 dargestellt, die ein Gehäuse 12 umfasst, welches auf einen Pol 14, beispielsweise den Pluspol, einer nicht gezeigten Kraftfahrzeugbatterie aufsetzbar ist.

In dem Gehäuse 12 ist eine Batterieklemme 16 vorgesehen, um die Anschlusseinheit 10 elektrisch mit dem Pol 14 der Kraftfahrzeugbatterie zu verbinden.

Von der Batterieklemme 16 geht ein durch eine einzelne Leitung gebildeter erster Leitungsabschnitt 18 aus, der in einen zweiten Leitungsabschnitt 20 übergeht. Im Übergangsbereich vom ersten Leitungsabschnitt 18 zum zweiten Leitungsabschnitt 20 spaltet sich die Leitung 18 in eine Bypassleitung 22 und eine Hauptleitung 24 auf, die den zweiten Leitungsabschnitt 20 bilden.

Die Bypassleitung 22 und die Hauptleitung 24 enden jeweils in einer an einer Seite 26 des Gehäuses 12 vorgesehenen Schnittstelle 28, 30, die zum Anschluss wenigstens einer elektrischen und/oder elektronischen Komponente an die Anschlusseinheit 10 dient.

Bei dem in Fig. 1 gezeigten Ausführungsbeispiel ist die Schnittstelle 28 der Bypassleitung 22 zum Anschließen eines elektrischen Kraftfahrzeugbordnetzes und die Schnittstelle 30 der Hauptleitung 24 zum Anschließen eines Anlassers und einer Lichtmaschine vorgesehen.

Bevorzugt sind die Schnittstellen 28, 30 durch Steckerteile gebildet, die mit entsprechend komplementär ausgebildeten Steckerteilen zusammensteckbar sind, welche an einem Kabelstrang des Bordnetzes bzw. an einem zum Anlasser und zur Lichtmaschine führenden Kabelstrang vorgesehen sind.

In dem ersten Leitungsabschnitt 18 ist ein auf einer Platine 31 angeordneter Sensor 32 vorgesehen, der zur Messung des durch den ersten Leitungsabschnitt 18 fließenden Gesamtbatteriestroms, der Batteriespannung sowie der Temperatur der Batterie dient. Der Sensor 32 weist einen Shunt-Widerstand auf, um eine nachträgliche Kalibrierung des Sensors 32 zu ermöglichen.

Über eine Leitung 33 ist der Sensor 32 mit einer Auswerteeinheit 34 verbunden, durch welche von dem Sensor 32 ausgegebene Messsignale auswertbar sind. Die Auswerteeinheit 34 kann in eine zentrale Recheneinheit des Kraftfahrzeugs integriert oder als separates Modul ausgebildet sein und bildet neben dem Sensor 32 einen Bestandteil eines Batteriemanagementsystems des Kraftfahrzeugs.

An der Hauptleitung 24 ist eine Trenneinheit 36 angeordnet, die eine reversible oder irreversible elektrische Unterbrechung der Hauptleitung 24 ermöglicht. Die Trenneinheit 36 weist ein nicht dargestelltes pyrotechnisch betätigbares Trennelement auf, welches bei einer Aktivierung der Trenneinheit 36 die Hauptleitung 24 mechanisch durchtrennt. Durch eine Betätigung des Trennelements lassen sich, zum Beispiel bei einem Unfall, der an die Hauptleitung 24 angeschlossene Anlasser und die angeschlossene Lichtmaschine elektrisch von der Batterie entkoppeln.

Die Trenneinheit 36 ist über eine Leitung 38 durch ein von außerhalb der Auswerteeinheit 10 zugeführtes Signal, d.h. also durch ein externes Signal, aktivierbar. Bei dem externen Signal kann es sich beispielsweise um ein Signal handeln, welches auch zur Aktivierung eines Airbags verwendet wird.

In Fig. 2 ist eine zweite Ausführungsform der erfindungsgemäßen Anschlusseinheit 10 dargestellt, die sich von der in Fig. 1 gezeigten ersten Ausführungsform im Wesentlichen darin unterscheidet, dass der Sensor 32 nicht im ersten Leitungsabschnitt 18, sondern an der Bypassleitung 22 angeordnet ist.

Durch die Anordnung des Sensors 32 an der Bypassleitung 22 ist anders als bei der in Fig. 1 gezeigten ersten Ausführungsform nicht der Gesamtbatteriestrom, sondern lediglich ein Teilstrom, nämlich der durch die Bypassleitung 22 fließende Teil des Batteriestroms, messbar.

Im weiteren Unterschied zur ersten Ausführungsform ist die Hauptleitung 24 der zweiten Ausführungsform ausschließlich zur Verbindung des Anlassers mit dem Batteriepol 14 vorgesehen, wohingegen sowohl das Bordnetz als auch die Lichtmaschine über die Bypassleitung 22 an die Batterie anzuschließen sind.

In Fig. 3 ist eine dritte Ausführungsform der erfindungsgemäßen Anschlusseinheit 10 dargestellt, die sich von der in Fig. 2 gezeigten zweiten Ausführungsform darin unterscheidet, dass, ähnlich wie bei der in Fig. 1 dargestellten ersten Ausführungsform, die Bypassleitung 22 zum Anschluss eines Kraftfahrzeugbordnetzes und die Hauptleitung 24 zum Anschluss eines Anlassers und einer Lichtmaschine des Kraftfahrzeugs vorgesehen ist.

Im weiteren Unterschied zur zweiten Ausführungsform sind bei der dritten Ausführungsform ein erster Sensor 40 an der Bypassleitung 22 und ein zweiter Sensor 42 an der Hauptleitung 24 angeordnet. Durch die Sensoren 40, 42 lässt sich also nicht nur der Stromverbrauch durch das Bordnetz, sondern auch der Stromverbrauch durch den Anlasser bzw. der durch die Lichtmaschine erzeugte Ladestrom überwachen. Die Sensoren 40, 42 sind auf einer Platine 44 angeordnet und ermöglichen ähnlich wie der Sensor 32 der vorherigen Ausführungsformen eine Überwachung der Batterietemperatur.

Wie bei den voranstehend beschriebenen Ausführungsformen ist auch die Trenneinheit 36 der dritten Ausführungsform mittels eines externen Signals aktivierbar.

In Fig. 4 ist eine vierte Ausführungsform der erfindungsgemäßen Anschlusseinheit 10 dargestellt, die sich von der in Fig. 3 gezeigten dritten Ausführungsform lediglich darin unterscheidet, dass die Trenneinheit 36 nicht durch ein externes, sondern nur durch ein von den Sensoren 40, 42 erzeugtes internes Signal aktivierbar ist. Die Trenneinheit 36 ist zu diesem Zweck über eine Leitung 46 mit der Platine 44 verbunden.

Anstelle einer externen Aktivierung der Trenneinheit 36 durch beispielsweise ein Airbagsignal, wird eine elektrische Entkopplung des Anlassers und der Lichtmaschine von der Batterie hier also ausschließlich intern durch die Sensoren 40, 42 bewirkt, zum Beispiel wenn der die Hauptleitung 24 überwachende Sensor 42 eine einen vorbestimmten Schwellwert überschreitende Stromstärke detektiert oder einen Stromfluss in einer unerwünschten Richtung feststellt.

Obwohl die Aktivierung der Trenneinheit 36 durch ein internes Signal lediglich im Zusammenhang mit der in Fig. 4 gezeigten vierten Ausführungsform beschrieben wurde, sei darauf hingewiesen, dass eine derartige interne Aktivierung der Trenneinheit 36 auch bei den in Fig. 1 bis 3 gezeigten ersten bis dritten Ausführungsformen realisiert werden kann, und zwar zusätzlich oder alternativ zu der erläuterten externen Aktivierung der Trenneinheit 36. Erforderlich ist lediglich eine entsprechende Verschaltung der Trenneinheit 36 mit dem Sensor 32 bzw. den Sensoren 40, 42.

### Bezugszeichenliste

- 10: Anschlusseinheit
- 12: Gehäuse
- 14: Batteriepol
- 16: Batterieklemme
- 18: erster Leitungsabschnitt
- 20: zweiter Leitungsabschnitt
- 22: Bypassleitung
- 24: Hauptleitung
- 26: Gehäuseseite
- 28: Schnittstelle
- 30: Schnittstelle
- 31: Platine
- 32: Sensor
- 33: Leitung
- 34: Auswerteeinheit
- 36: Trenneinheit
- 38: Leitung
- 40: Sensor
- 42: Sensor
- 44: Platine
- 46: Leitung

## Patentansprüche

1. Anschlusseinheit (10) zum Verbinden von elektrischen und/oder elektronischen Komponenten mit einem Pol (14) einer Kraftfahrzeugbatterie, umfassend
einen an den Batteriepol (14) anschließbaren ersten Leitungsabschnitt (18),
einen aus dem ersten Leitungsabschnitt (18) hervorgehenden zweiten Leitungsabschnitt (20), welcher eine Bypassleitung (22) und eine Hauptleitung (24) umfasst, die jeweils zum Anschluss wenigstens einer elektrischen und/ oder elektronischen Komponente ausgestaltet sind,
eine Trenneinheit (36), durch welche eine an die Hauptleitung (24) angeschlossene elektrische und/oder elektronische Komponente elektrisch von der Batterie trennbar ist, und
wenigstens einen Sensor (32; 40, 42) zur Messung eines Batteriestroms und/oder einer Batteriespannung,
**dadurch gekennzeichnet,**
**dass** die Trenneinheit (36) und der Sensor (32; 40, 42) zu einer Einheit zusammengefasst und in einem gemeinsamen Gehäuse untergebracht sind, und
**dass** eine Schnittstelle (28) zum Verbinden eines elektrischen und/oder elektronischen Bordnetzes des Kraftfahrzeugs mit der Bypassleitung (22) und eine Schnittstelle (30) zum Verbinden eines Anlassers des Kraftfahrzeugs mit der Hauptleitung (24) vorgesehen ist.

2. Anschlusseinheit (10) nach Anspruch 1,
**dadurch gekennzeichnet,**
**dass** der Sensor (32) in dem ersten Leitungsabschnitt (18) angeordnet ist.

3. Anschlusseinheit (10) nach Anspruch 1,
**dadurch gekennzeichnet,**
**dass** der Sensor (32; 40, 42) in dem zweiten Leitungsabschnitt (20) angeordnet ist.

4. Anschlusseinheit (10) nach Anspruch 3,
**dadurch gekennzeichnet,**
**dass** der Sensor (32, 40) mit der Bypassleitung (22) verbunden ist.

5. Anschlusseinheit (10) nach Anspruch 3 oder 4,
**dadurch gekennzeichnet ,**
**dass** ein erster Sensor (40) mit der Bypassleitung (22) und ein zweiter Sensor (42) mit der Hauptleitung (24) verbunden sind.

6. Anschlusseinheit (10) nach einem der vorherigen Ansprüche,
**dadurch gekennzeichnet ,**
**dass** die Trenneinheit (36) zur Aktivierung in Abhängigkeit von einem durch den wenigstens einen Sensor (32; 40, 42) ausgegebenen Messwert ausgestaltet ist.

7. Anschlusseinheit (10) nach einem der vorherigen Ansprüche,
**dadurch gekennzeichnet ,**
**dass** die Trenneinheit (36) zur Aktivierung durch ein externes Signal ausgestaltet ist.

8. Anschlusseinheit (10) nach einem der vorherigen Ansprüche,
**dadurch gekennzeichnet,**
**dass** die Trenneinheit (36) ein pyrotechnisch betätigbares Trennelement aufweist, mittels welchem die Hauptleitung (24) bei einer Aktivierung der Trenneinheit (36) durchtrennbar ist.

## Claims

1. Connection unit (10) for connecting electrical and/or electronic components to a pole (14) of a motor vehicle battery, comprising a first conductor section (18) which can be connected to the battery pole (14), a second conductor section (20) emerging from the first conductor section (18) and which comprises a bypass conductor (22) and a main conductor (24) which are designed in each case for connection of at least one electrical and/or electronic component, a disconnecting unit (36), by means of which an electrical and/or electronic component connected to the main conductor (24) can be disconnected electrically from the battery, and at least one sensor (32; 40, 42) for measuring a battery current and/or a battery voltage, **characterised in that** the disconnecting unit (36) and the sensor (32; 40, 42) are combined to form a unit and accommodated in a common housing, and **in that** an interface (28) is provided for connecting an electrical and/or electronic on-board power supply of the motor vehicle to the bypass conductor (22) and an interface (30) is provided for connecting a starter of the motor vehicle to the main conductor (24).

2. Connection unit (10) according to claim 1, **characterised in that** the sensor (32) is arranged in the first conductor section (18).

3. Connection unit (10) according to claim 1, **characterised in that** the sensor (32; 40, 42) is arranged in the second conductor section (20).

4. Connection unit (10) according to claim 3, **characterised in that** the sensor (32, 40) is connected to the bypass conductor (22).

5. Connection unit (10) according to claim 3 or 4, **characterised in that** a first sensor (40) is connected to the bypass conductor (22) and a second sensor (42) is connected to the main conductor (24).

6. Connection unit (10) according to one of the preceding claims, **characterised in that** the disconnecting unit (36) is designed for activation as a function of a measured value issued by the at least one sensor (32; 40, 42).

7. Connection unit (10) according to one of the preceding claims, **characterised in that** the disconnecting unit (36) is designed for activation by an external signal.

8. Connection unit (10) according to one of the preceding claims, **characterised in that** the disconnecting unit (36) has a pyrotechnically operatable disconnecting element, by means of which the main conductor (24) can be cut during activation of the disconnecting unit (36).

## Revendications

1. Unité de raccordement (10) pour connecter des composants électriques et/ou électroniques à un pôle (14) d'une batterie de véhicule automobile, comportant
une première partie de ligne (18) susceptible d'être raccordée au pôle (14) de la batterie,
une seconde partie de ligne (20) partant de la première partie de ligne (18) et présentant une ligne de dérivation (22) et une ligne principale (24) réalisées chacune pour le raccordement d'au moins un composant électrique et/ou électronique,
un ensemble de sectionnement (36) par lequel un composant électrique et/ou électronique raccordé à la ligne principale est susceptible d'être sectionné de la batterie, et
au moins un capteur (32 ; 40, 42) pour mesurer un courant électrique et/ou une tension de la batterie,
**caractérisée en ce que**
l'ensemble de sectionnement (36) et le capteur (32 ; 40, 42) sont regroupés en une unité et logés dans un boîtier commun, et
**en ce qu'**il est prévu une interface (28) destinée à connecter un réseau de bord électrique et/ou électronique du véhicule automobile à la ligne de dérivation (22), et une interface (30) destinée à connecter un démarreur d'un véhicule automobile à la ligne principale (24).

2. Unité de raccordement (10) selon la revendication 1,
**caractérisée en ce que**
le capteur (32) est agencé dans la première partie de ligne (18).

3. Unité de raccordement (10) selon la revendication 1,
**caractérisée en ce que**
le capteur (32 ; 40, 42) est agencé dans la seconde partie de ligne (20).

4. Unité de raccordement (10) selon la revendication 3,
**caractérisée en ce que**
le capteur (32, 40) est connecté à la ligne de dérivation (22).

5. Unité de raccordement (10) selon la revendication 3 ou 4,
**caractérisée en ce que**
un premier capteur (40) est connecté à la ligne de dérivation (22) et un second capteur (42) est connecté à la ligne principale (24).

6. Unité de raccordement (10) selon l'une des revendications précédentes,
**caractérisée en ce que**
l'ensemble de sectionnement (36) est conçu pour l'activation en fonction d'une valeur mesurée émise par ledit au moins un capteur (32 ; 40, 42).

7. Unité de raccordement (10) selon l'une des revendications précédentes,
**caractérisée en ce que**
l'ensemble de sectionnement (36) est conçu pour l'activation par un signal externe.

8. Unité de raccordement (10) selon l'une des revendications précédentes,
**caractérisée en ce que**
l'ensemble de sectionnement (36) comprend un élément de sectionnement susceptible d'être actionné par voie pyrotechnique au moyen duquel la ligne principale (24) est susceptible d'être sectionnée lors d'une activation de l'ensemble de sectionnement (36).
